Europäisches Patentamt

European Patent Office

Office européen des brevets

(19)

(11)  **EP 1 042 119 B1**

(12)  **FASCICULE DE BREVET EUROPEEN**

(45) Date de publication et mention
de la délivrance du brevet:
**29.01.2003  Bulletin 2003/05**

(51) Int Cl.⁷: **B32B 7/06**, B44C 1/17,
B41M 3/12, B65D 85/60

(21) Numéro de dépôt: **98962484.6**

(22) Date de dépôt: **17.12.1998**

(86) Numéro de dépôt international:
**PCT/FR98/02755**

(87) Numéro de publication internationale:
**WO 99/032279 (01.07.1999 Gazette 1999/26)**

(54)  **FILM EN MATERIAU MULTICOUCHES COMPRENANT UNE COUCHE INTERNE LUDIQUE ET PROCEDE DE FABRICATION**

MEHRSCHICHTIGE FOLIE MIT SPIELINNENSCHICHT UND HERSTELLUNGSVERFAHREN

MULTILAYER MATERIAL FILM COMPRISING AN INNER FUN LAYER AND METHOD FOR MAKING SAME

(84) Etats contractants désignés:
**AT BE CH CY DE DK ES FI FR GB GR IE IT LI LU MC NL PT SE**

(30) Priorité: **22.12.1997  FR 9716593**

(43) Date de publication de la demande:
**11.10.2000  Bulletin 2000/41**

(73) Titulaire: **PECHINEY EMBALLAGE FLEXIBLE EUROPE**
**92115 Clichy (FR)**

(72) Inventeur: **GUINEA CADINANOS, Manuel**
**E-01003 Vitoria (ES)**

(74) Mandataire: **Pigasse, Daniel et al**
**Pechiney,**
**Immeuble "SIS"**
**217, cours Lafayette**
**69451 Lyon Cedex 06 (FR)**

(56) Documents cités:
**DE-U- 29 616 117          GB-A- 1 180 477**
**US-A- 5 601 859**

• **PATENT ABSTRACTS OF JAPAN vol. 018, no. 055 (M-1550), 28 janvier 1994 & JP 05 278134 A (TOPPAN PRINTING CO LTD), 26 octobre 1993**

**Description**

DOMAINE DE L'INVENTION

L'invention concerne le domaine des films d'emballage souple, et plus particulièrement les films de conditionnement de produits de confiserie (par exemple bonbons, chocolats ou chewing-gum) destinés principalement aux enfants.

ETAT DE LA TECHNIQUE

L'emballage de produits de confiserie, surtout celui destiné aux enfants, doit avoir la double fonction d'assurer la conservation du produit conditionné dans des conditions d'hygiène souhaitées, et de rendre ce produit attractif pour le consommateur, en particulier pour le jeune consommateur.

L'emballage de ces produits est généralement un conditionnement unitaire : chaque dit produit de confiserie correspond à une consommation unitaire, et est conditionné dans une portion de film, typiquement par pliage de ladite portion de film. ledit film étant imprimé sur sa face externe avec des motifs répétitifs.

L'expression " consommation unitaire " ou " conditionnement unitaire " ne signifie pas qu'il s'agit de l'emballage d'un seul produit de confiserie, mais qu'il s'agit d'un produit consommé en une seule fois, par opposition à l'emballage de produits dont la consommation serait échelonnée dans le temps.

Un des moyens utilisés pour rendre ledit produit encore plus attractif consiste à introduire dans ledit conditionnement unitaire une portion de support ludique, typiquement une portion de support portant un élément visuel, de graphisme généralement variable d'une dite portion à l'autre, tel que image, décalcomanie ou texte amusant.

Par " variable ", on entend qu'il peut y avoir typiquement au moins quelques dizaines ou quelques centaines de graphismes différents pour la totalité de la production, de manière à ce que la diversité même dudit graphisme puisse attirer le collectionneur potentiel qu'est tout jeune consommateur.

Cette portion de support ludique présente généralement un format inférieur à celui de ladite portion de film pour pouvoir être contenu, avec ledit produit, à l'intérieur de ladite portion de film une fois plié.

Ainsi, après avoir déplié ladite portion de film, le consommateur pourra, outre consommer ledit produit, se distraire avec ladite portion de support ludique prise en elle-même.

PROBLEME POSE

Le problème posé par l'état de la technique est d'abord un problème de coût dans la mesure où, d'une part, le conditionneur desdits produits utilise deux matériaux différents, typiquement sous forme de deux bobines dudit film et dudit support ludique, et où, d'autre part, les machines et procédés de conditionnement desdits produits doivent en conséquence tenir compte de la nécessité d'utiliser deux sources de matériaux, de découper deux portions de format différent, et de positionner ladite portion de support ludique au-dessus de ladite portion de film avant de placer ledit produit de consommation unitaire, et de plier ladite portion de film.

Ledit coût peut s'analyser, de manière plus détaillée, en termes de coûts de matière, de coût d'investissement en machines de conditionnement et de coût de fonctionnement de ces machines.

Le problème à résoudre est aussi un problème de qualité dans la mesure où, pour des raisons de productivité et de simplicité du procédé, la fabrication desdites portions à partir desdites bobines, pour ledit film et pour ledit support, se fait par un découpage dans le sens travers déclenché à partir d'une seule cellule photoélectrique repérant le passage d'un repère porté par chaque dite portion. Il est clair dans ce cas qu'il n'est pas possible d'avoir à la fois, pour ladite portion de film et pour ladite portion de support ludique, un centrage correct, dans le sens machine, dudit motif répétitif pour ladite portion de film, et dudit graphisme pour ladite portion de support ludique, compte tenu de l'élasticité et des allongements propres audit film et audit support en bobines et des tensions des films et supports sur machines de conditionnement.

Le conditionneur doit donc choisir de centrer prioritairement soit ledit motif répétitif soit ledit graphisme, ce qui implique a contrario et corrélativement la présence d'un décentrage plus ou moins grand dans le sens machine, et donc une impression visuelle moins favorable, soit dudit graphisme, soit dudit motif répétitif

Par ailleurs, il serait encore plus coûteux de découper séparément et de manière centrée chacune des bobines, puis de positionner avec précision une portion dudit film et une portion dudit support.

La demanderesse a donc recherché des moyens pour supprimer l'utilisation de deux matériaux, de manière à réduire à la fois les coûts de matière, les coûts d'investissement et les coûts de fonctionnement, et de manière à avoir un motif répétitif et un graphisme correctement centrés.

La demanderesse a également recherché une solution au problème qui ne modifie pas sensiblement les conditions d'utilisation des machines de conditionnement, si ce n'est dans le sens d'une simplification des machines de conditionnement et du procédé correspondant.

DESCRIPTION DE L'INVENTION

Selon l'invention, le film en matériaux multicouches destiné, après découpage en portions, au conditionnement de produits de consommation unitaire, typiquement de confiserie, comprend successivement de l'extérieur vers l'intérieur :

a) un premier ensemble multicouche comprenant une couche externe de matériau, dont la face externe est imprimée d'un motif répétitif, chaque dite portion devant être imprimée dudit motif,

b) un second ensemble multicouche comprenant un graphisme dit « central » formé par tout moyen d'impression, revêtu intérieurement d'une couche adhésive, et repéré par rapport audit motif répétitif,

c) un troisième ensemble multicouche comprenant une couche interne de matériau revêtue extérieurement d'une dite première couche de délaminage au contact de ladite couche adhésive choisie de manière à ce que le consommateur final desdits produits puisse séparer manuellement, par un premier délaminage, ledit troisième ensemble du reste dudit film comprenant lesdits premier et second ensembles. et faire ainsi apparaître clairement ledit graphisme central revêtu de ladite couche adhésive.

Ce type de film permet en particulier de créer un film d'emballage intégrant des possibilités de jeux : en effet, ledit graphisme central peut être masqué jusqu'à ce que le consommateur final sépare, par un premier délaminage, ledit troisième ensemble pour faire apparaître ledit graphisme central.

De préférence, dans le film selon l'invention, ledit premier ensemble comprend en outre, sur la face interne de ladite couche externe, une dite seconde couche de délaminage, de manière à pouvoir transférer ledit graphisme central sur un support quelconque, en appliquant ledit reste dudit film comprenant lesdits premier et second ensembles sur ledit support et en retirant ledit premier ensemble par un second délaminage, ladite couche adhésive assurant la fixation dudit graphisme central sur ledit support quelconque par décalcomanie, la force de délaminage entre ladite couche adhésive et ledit support quelconque ou entre ladite couche adhésive et ledit graphisme central étant supérieure à la force de délaminage entre ledit graphisme central et ledit premier ensemble.

Ce film permet, après ledit premier délaminage, d'appliquer les premier et second ensembles comprenant ledit graphisme sur un support quelconque, et, grâce audit second délaminage assurant la séparation du premier ensemble, d'obtenir par décalcomanie sur un support quelconque, le second ensemble comprenant ledit graphisme central.

Il est aisé d'imaginer l'intérêt, notamment pour les jeunes consommateurs, de collectionner, par exemple dans un classeur ou un cahier, les vignettes formées par décalcomanie de chaque portion de film.

DESCRIPTION DES FIGURES

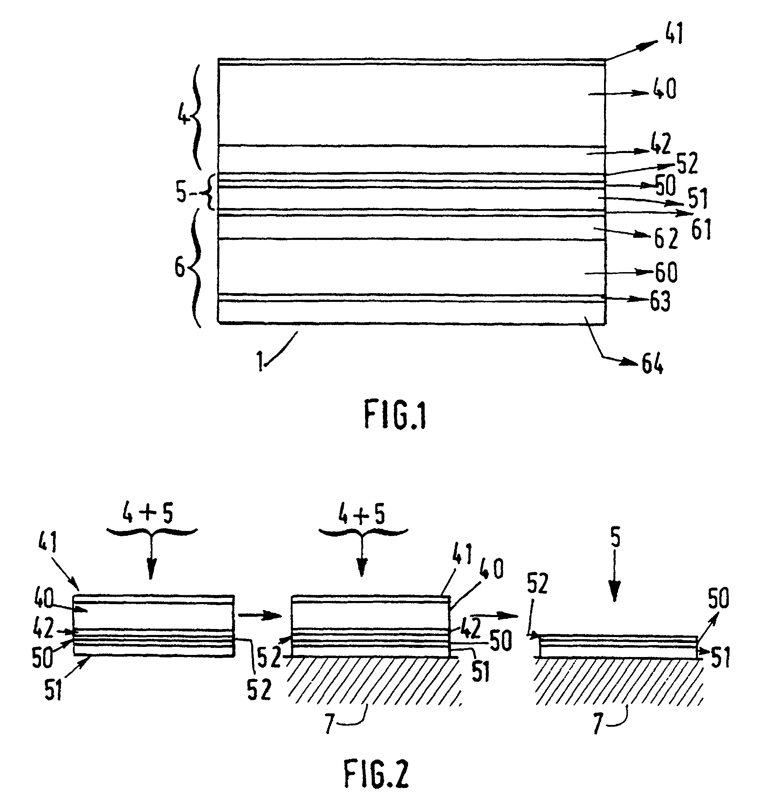

La figure 1 illustre, en coupe transversale, la structure d'un film (1) pour décalcomanie selon l'invention, comprenant, de l'extérieur vers l'intérieur la succession de couches suivantes :

- une impression externe de motif répétitif (41)
- une couche externe de matériau (40)
- une dite seconde couche de délaminage (42)
  ces couches (40), (41) et (42) formant ledit premier ensemble de couches (4),
- une couche de vernis (52)
- un graphisme central repéré (50)
- une couche adhésive (51)
  ces couches (50), (51), (52) formant ledit second ensemble de couches (5),
- une dite première couche de délaminage (61)
- une couche de résine (62)
- une couche interne (60)
- un graphisme intérieur optionnel (63)
- une couche de scellage à froid (64).
  ces couches (60), (61), (62), (63), (64) formant ledit troisième ensemble de couches (6).

La figure 2 illustre, en coupe, l'utilisation ludique du film (1) :

- après ledit premier délaminage au cours duquel est séparé ledit troisième ensemble, on obtient le reste du film (1), constitué desdits premier et second ensemble (4+5),
- ce reste est appliqué sur un support (7) quelconque sur lequel il adhère grâce à la couche adhésive (51),
- puis ledit premier ensemble (4) est séparé par ledit second délaminage, de manière à obtenir ledit graphisme central (50), revêtu d'une couche de vernis (52) supprimant tout risque de collage.

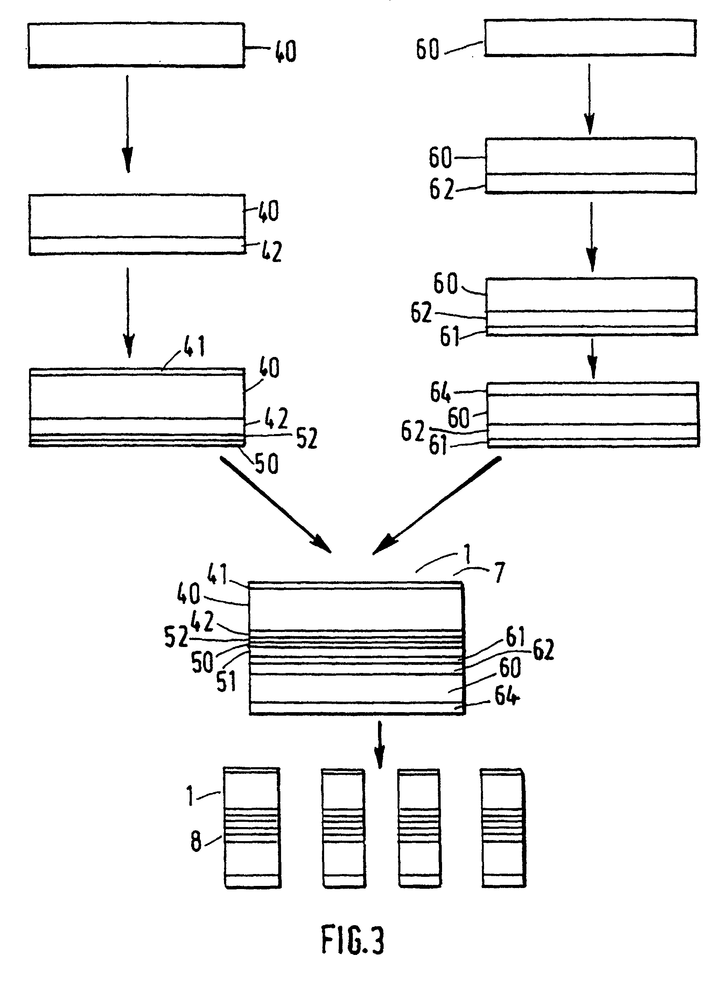

La figure 3 illustre le procédé de fabrication du film (1) selon les figures 1 et 2. mais sans le graphisme intérieur (63) :

- fabrication d'un premier sous-ensemble de couches à partir d'une bobine de grande largeur de matériau (40) formant ladite couche externe comprenant :

  * la fabrication d'un film «40/42», de préférence par extrusion d'une couche de délaminage (42),
  * puis la fabrication d'un film noté « 41/40/42/52/50 », par application de vernis (52) et impression recto-verso (41) et (50), de préférence en une seule passe, sur le film « 40/42 »,

- fabrication d'un second sous-ensemble de couches à partir d'une bobine de grande largeur de matériau (60) formant ladite couche interne comprenant :

  * la fabrication d'un film « 62/60 », de préférence par extrusion de résine (62),

* la fabrication d'un film « 61/62/60 » par application d'une dite première couche de délaminage (61) sur le film « 62/60 »,
* la fabrication d'un film « 61/62/60/64 » par application d'une couche (64) de scellage à froid sur le film « 61/62/60 »,

- doublage par lamination avec une couche d'adhésif (51) des deux sous-ensembles précédents pour former le film (1), en bobine de grande largeur (7), et de structure, de l'extérieur vers l'intérieur, égale à « 41/40//42/52/50/51/61/62/60/64 », bobine refendue ensuite en bobines (8) de petite largeur.

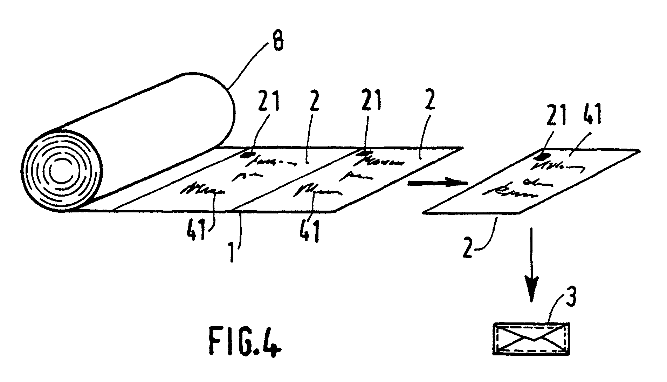

La figure 4 schématise, en perspective, une bobine (8) de petite largeur dont la largeur correspond en fait à une des deux dimensions de ladite portion (2) du film (1), dont la face externe porte l'impression de motifs répétitifs (41), et d'un signe (21) destiné à assurer le repérage de la découpe de chaque dit motif répétitif (41).

DESCRIPTION DETAILLEE DE L'INVENTION

Selon l'invention, lesdites première (61) et seconde (42) couches de délaminage sont choisies de manière à séparer par délaminage, dans l'ordre, d'abord ledit troisième ensemble (6) du reste du film (4+5), puis le second ensemble (5) du premier ensemble (4), afin de pouvoir appliquer ledit second ensemble sur un support quelconque (7). Exprimé autrement, les matériaux sont choisis de sorte que les forces de délaminage entre couches X et Y, notée $FD_{X/Y}$, sont dans l'ordre suivant :

$$FD_{51/61} < FD_{42/52} < FD_{51/7}$$

De préférence, ledit second ensemble (5) comprend extérieurement une couche de vernis (52), de préférence un vernis nitrocellulosique, de manière à ce que ledit graphisme (50) fixé sur ledit support (7) par décalcomanie présente une surface externe non collante.
Ainsi, ledit graphisme peut être reporté par décalcomanie sur un support quelconque, par exemple un cahier, sans risquer de voir les pages de ce cahier coller les unes aux autres.
Il peut être avantageux que ledit troisième ensemble (6) comprenne, entre ladite couche interne (60) et ladite première couche de délaminage (61), une couche de résine (62), de préférence une couche de polyoléfine, de manière à rendre la surface externe de ladite couche (60) plus lisse et favoriser l'adhérence de ladite première couche de délaminage (61) sur la face externe dudit troisième ensemble (6).
On peut aussi de la sorte augmenter les caractéristiques mécaniques de ladite couche interne (60), de sorte qu'il est ainsi possible d'utiliser comme couche interne (60) un matériau de moindre coût ayant des caractéristiques mécaniques juste suffisantes pour passer sur machine de coextrusion-laminage.
Chaque fois que cela est nécessaire, notamment parce que le produit de consommation unitaire (3) doit être hermétiquement clos après pliage de ladite portion (2), ledit troisième ensemble (6) est revêtu sur sa face interne d'une couche de scellage (64), de préférence une couche de scellage à froid, de manière à assurer un scellage de ladite portion une fois pliée.
Cette couche de scellage peut être constituée d'une cire, d'une résine « hot-meit », d'un produit de scellage à froid par pression, d'un produit de thermoscellage.
Optionnellement, ladite couche interne (60) peut être imprimée sur sa face interne d'un graphisme dit « intérieur » (63), de manière à permettre, après dépliage de la portion de film d'emballage par le consommateur final, une loterie ou un jeu basé sur la comparaison entre ledit graphisme « intérieur » (63) et ledit graphisme « central » (50) ou ledit motif répétitif (41), ce qui peut augmenter fortement les possibilités ludiques dudit film (1).
Selon l'invention, ladite couche externe (40) peut être en un matériau non transparent choisi parmi : papier, feuille d'aluminium de moins de 30 µm d'épaisseur, film en matière thermoplastique de moins de 50 µm d'épaisseur, métallisé ou non.
Ladite couche interne (60) peut être en un matériau non transparent choisi parmi : papier, feuille d'aluminium de moins de 30 µm d'épaisseur, film en matière thermoplastique de moins de 50 µm d'épaisseur, métallisé ou non.
Ladite première couche de délaminage (61) est constituée par une couche de matériaux, connus pour exercer une fonction d'anti-adhérence vis-à-vis de ladite couche adhésive (51), et appliquée sur ladite couche interne (60), grâce à l'emploi éventuel d'une autre couche de résine (62). De préférence, ladite première couche de délaminage (61) est constituée par une couche de silicone.
Cependant, ladite couche interne (60) peut être traitée en surface, de manière connue en soi, pour obtenir un effet d'anti-adhérence au contact de ladite seconde couche adhésive (51).
Selon l'invention, ladite seconde couche de délaminage (42), utilisée pour permettre ledit second délaminage, est constituée par tout matériau, vernis d'enduction, matière thermoplastique, choisi pour présenter une force de délaminage par rapport audit graphisme (50), inférieure à celle de ladite couche adhésive (51) par rapport au même dit graphisme (51).
Ladite couche adhésive (51) est choisie parmi les adhésifs dits «alimentaires», de préférence parmi les dispersions aqueuses de polymères.
Ledit graphisme (50,63), qu'il soit intérieur ou central, peut être constitué par tout signe visuel distinctif; qu'il s'agisse de textes, d'images, de dessins ou de rébus, pouvant présenter un caractère ludique.

Un autre objet de l'invention est constitué par un procédé de fabrication du film (1) selon l'invention, dans lequel :

1) on fabrique un premier sous-ensemble de couches à partir d'une bobine de ladite couche externe (40) :

a) en appliquant, si nécessaire, ladite seconde couche de délaminage (42) sur ladite couche externe, de préférence par extrusion, pour former le film repéré par «40/(42) »

b) en imprimant. de préférence en une passe, les deux faces du film formé en a), la face externe étant imprimé desdits motifs répétitifs (41), la face interne dudit graphisme central (50), chaque dit graphisme central (50) étant en regard et repéré par rapport à chaque dit motif répétitif (41), une couche de vernis (52) étant éventuellement déposée avant impression dudit graphisme central, pour former le film repéré par « 41/40/(42)/(52)/50 ». où les couches en option sont mises entre parenthèses,

2) on fabrique un second sous-ensemble de couches à partir d'une bobine de ladite couche interne (60) :

a) en appliquant, si nécessaire, une autre couche de résine (62), et dans ce cas, par extrusion de préférence, sur ladite couche interne (60), pour former le film repéré par « (62)/60 ».

b) en appliquant, si nécessaire, ladite première couche de délaminage (61) sur le film obtenu en a), au cas où ladite couche interne (60) ne serait pas déjà traitée en surface pour obtenir un effet d'anti-adhérence, pour obtenir le film repéré par « 61/(62)/60 »,

c) en appliquant, si nécessaire, ladite couche de scellage (64), et dans ce cas, par extrusion de préférence, pour obtenir le film repéré par « 61/(62)/60/(64) »,

3) on assemble par lamination ledit premier et ledit second sous-ensemble, à l'aide de ladite couche adhésive (51), pour obtenir le film ayant la structure suivante, de l'extérieur vers l'intérieur «41/40/(42)/(52)/50/51/61/(62)/60/(64)», en bobine de grande largeur (7) refendue ensuite en bobines de petite largeur (8).

Il importe de noter que ladite couche adhésive (51) présente la double fonction de permettre l'assemblage final du film (1) et d'assurer la fixation dudit graphisme (50) sur tout support (7).

EXEMPLE DE REALISATION

On a obtenu un film (1) selon le schéma de la figure 3 par :

A - fabrication d'un premier sous-ensemble de couches à partir d'une bobine de papier à 40g/m$^2$ et de 600 mm de largeur, formant ladite couche exteme (40), et comprenant :

* la fabrication d'un film «40/42 » par extrusion d'une résine polyoléfinique (PE ou PP) (42) avec un grammage de 15 g/m$^2$ sur la bande de papier (40),
* puis la fabrication d'un film noté «41/40/42/52/50», par application d'un vernis nitrocellulosique (52) à 3 g/m$^2$ et impression recto-verso (41) et (50), en une seule passe sur le film « 40/42 »,

B - fabrication d'un second sous-ensemble de couches à partir d'une bobine de papier à 25 g/m$^2$ de 600 mm de largeur, formant ladite couche interne (60), et comprenant :

* la fabrication d'un film « 62/60 » par extrusion de résine polyoléfinique (PE ou PP) (62) à 10 g/m$^2$ sur la bande de papier (60),
* la fabrication d'un film « 61/62/60 » par application d'une dite première couche de délaminage (61) à base de silicone à 1 g/m$^2$ sur le film « 62/60 »
* la fabrication d'un film « 61/62/60/64 » par application d'une couche de cire (64) de scellage à froid sur le film « 61/62/60 », à 10g/m$^2$.

C - doublage par lamination, avec une couche d'adhésif (51) issue d'une dispersion aqueuse de polymère acrylique, des deux sous-ensembles précédents pour former le film (1), en bobine de grande largeur (7), et de structure, de l'extérieur vers l'intérieur, « 41/40//42/52/50/51/61/62/60/64 », bobine refendue en douze bobines (8) de petite largeur (50 mm environ).

AVANTAGES DE L'INVENTION

Si l'on compare globalement la situation résultant de la mise au point du film selon l'invention avec la situation selon l'état de la technique, en ce qui concerne les emballages avec décalcomanie, il importe de noter les avantages décisifs qui suivent :

- le nouveau film est moins cher que les deux films utilisés précédemment, d'où un avantage économique sur les coûts de matière,
- les stocks sont moins importants en volume et en valeur, d'où un fond de roulement plus faible,

- un seul fournisseur est nécessaire, au lieu de deux, le fabricant de film externe n'étant pas celui du film de décalcomanie, ce qui simplifie la gestion des stocks, des achats et la coordination des livraisons,
- la qualité technique du film (1) est supérieure par le repérage quasi-parfait entre le décor externe formé par les motifs répétitifs (41) et le graphisme central repéré (50). alors que, selon l'état de la technique, les deux portions de film sont indépendantes l'une de l'autre,
- la vitesse de conditionnement desdits produits de consommation unitaire est augmentée compte tenu du fait qu'elle n'est plus alimentée que par une seule bobine de film d'emballage,
- enfin, le film (1) présente un grand intérêt ludique et un grand intérêt en terme d'image. dans le domaine du marketing, et constitue ainsi un renouvellement de l'offre de produit qui est si nécessaire pour conserver ou développer les marchés de la grande consommation.

## Revendications

1. Film en matériaux multicouches (1) destiné, après découpage en portions (2), au conditionnement de produits de consommation unitaire (3), typiquement de confiserie, comprenant successivement de l'extérieur vers l'intérieur :

   a) un premier ensemble multicouche (4) comprenant une couche externe (40) de matériau, dont la face externe est imprimée d'un motif répétitif (41), chaque dite portion devant être imprimée dudit motif,
   b) un second ensemble multicouche (5) comprenant un graphisme dit « central » (50) formé par tout moyen d'impression, repéré par rapport audit motif répétitif (41), et revêtu intérieurement d'une couche adhésive (51),
   c) un troisième ensemble multicouche (6) comprenant une couche interne (60) de matériau revêtue extérieurement d'une dite première couche de délaminage (61) au contact de ladite couche adhésive (51) choisie de manière à ce que le consommateur final desdits produits puisse séparer manuellement, par un premier délaminage, ledit troisième ensemble (6) du reste dudit film comprenant lesdits premier et second ensembles (4+5), et faire ainsi apparaître clairement ledit graphisme (50) revêtu de ladite couche adhésive (51).

2. Film selon la revendication 1 dans lequel ledit premier ensemble (4) comprend en outre, sur la face interne de ladite couche externe (40), une dite seconde couche de délaminage (42) choisie de manière à rendre possible le transfert dudit graphisme (50) sur un support par décalcomanie.

3. Film selon la revendication 2 lesdites première (61) et seconde (42) couches de délaminage sont choisies de manière à séparer, dans l'ordre, ledit troisième ensemble (6) du reste du film (4+5). puis le second ensemble (5) du premier ensemble (4), afin de pouvoir appliquer ledit second ensemble sur ledit support (7).

4. Film selon une quelconque des revendications 2 et 3 dans lequel ledit second ensemble (5) comprend extérieurement une couche de vernis (52). de préférence un vernis nitrocellulosique, de manière à ce que ledit graphisme (50) fixé sur ledit support (7) par décalcomanie soit non collant.

5. Film selon une quelconque des revendications 2 à 4 dans lequel ledit troisième ensemble (6) comprend, entre ladite couche interne (60) et ladite première couche de délaminage (61), une couche de résine (62), de préférence une couche de polyoléfine, de manière à rendre la surface externe de ladite couche (60) plus lisse et favoriser l'adhérence de ladite première couche de délaminage (61) sur la face externe dudit troisième ensemble (6).

6. Film selon une quelconque des revendications 1 à 5 dans lequel ledit troisième ensemble (6) est revêtu sur sa face interne d'une couche de scellage (64), de préférence une couche de scellage à froid.

7. Film selon une quelconque des revendications 1 à 6 dans lequel ladite couche interne (60) est imprimée sur sa face interne d'un graphisme dit « intérieur » (63), de manière à permettre une loterie ou un jeu basé sur la comparaison entre ledit graphisme « intérieur » (63) et ledit graphisme « central » (50)ou ledit motif répétitif (41).

8. Film selon une quelconque des revendications 1 à 7 dans lequel ladite couche externe (40) est en un matériau non transparent choisi parmi : papier, feuille d'aluminium de moins de 30 µm d'épaisseur, film en matière thermoplastique de moins de 50 µm d'épaisseur, métallisé ou non.

9. Film selon une quelconque des revendications de 1 à 8 dans lequel ladite couche interne (60) est en un matériau non transparent choisi parmi : papier, feuille d'aluminium de moins de 30 µm d'épaisseur, film en matière thermoplastique de moins de 50 µm d'épaisseur, métallisé ou non.

10. Film selon une quelconque des revendications 1 à 9 dans lequel ladite première couche de délaminage (61) est constituée par une couche de matériaux, connus pour exercer une fonction d'anti-adhérence vis-à-vis de ladite couche adhésive (51), et appliquée sur ladite couche interne (60), sait directement agit grâce à une couche intermédiaire de résine (62).

11. Film selon la revendication 10 dans lequel ladite première couche de délaminage (61) est constituée par une couche de silicone.

12. Film selon une quelconque des revendications 1 à 9 dans lequel ladite couche interne (60) est traitée en surface de manière connue en elle-même pour obtenir un effet d'anti-adhérence au contact de ladite seconde couche adhésive (51).

13. Film selon une quelconque des revendications 2 à 12 dans lequel ladite seconde couche de délaminage, utilisée pour permettre ledit second délaminage, est constituée par tout matériau, vernis d'enduction, matière thermoplastique, choisi pour présenter une force de délaminage par rapport audit graphisme central (50), inférieure à celle de ladite couche adhésive (51) par rapport au même dit graphisme central (50).

14. Film selon une quelconque des revendications 1 à 13 dans lequel ladite couche adhésive (51) est choisie parmi les adhésifs dits « alimentaires », de préférence parmi les dispersions aqueuses de polymères.

15. Film selon une quelconque des revendications 1 à 14 dans lequel ledit graphisme (50,63), qu'il soit intérieur ou central, est constitué par tout signe visuel distinctif

16. Procédé de fabrication du film selon une quelconque des revendications 1 à 15 dans lequel :

   1) on fabrique un premier sous-ensemble de couches à partir d'une bobine de ladite couche externe (40):

   a) en appliquant, si nécessaire, ladite seconde couche de délaminage (42) sur ladite couche externe, de préférence par extrusion, pour former le film repéré par « 40/(42) »
   b) en imprimant, de préférence en une passe, les deux faces du film formé en a), la face externe étant imprimé desdits motifs répétitifs (41), la face interne dudit graphisme central (50), chaque dit graphisme central (50) étant en regard et repéré par rapport à chaque dit motif répétitif (41), une couche de vernis (52) étant éventuellement déposée avant impression dudit graphisme central, pour former le film repéré par « 41/40/(42)/(52)/50 »,

   2) on fabrique un second sous-ensemble de couches à partir d'une bobine de ladite couche interne (60) :

   a) en appliquant, si nécessaire, une autre couche de résine (62), et dans ce cas, par extrusion de préférence, sur ladite couche interne (60), pour former le film repéré par « (62)/60 ».
   b) en appliquant, si nécessaire, ladite première couche de délaminage (61) sur le film obtenu en a), au cas où ladite couche interne (60) ne serait pas déjà traitée en surface pour obtenir un effet d'anti-adhérence, pour obtenir le film repéré par « 61/(62)/60 »,
   c) en appliquant, si nécessaire, ladite couche de scellage (64), et dans ce cas, par extrusion de préférence, pour obtenir le film repéré par « 61/(62)/60/(64) »,

   3) on assemble par lamination ledit premier et ledit second sous-ensemble, à l'aide de ladite couche adhésive (51), pour obtenir le film ayant la structure suivante, de l'extérieur vers l'intérieur « 41/40/(42)/(52)/50/51/61/(62)/60/(64) », en bobine de grande largeur (7) refendue ensuite en bobines de petite largeur (8).

**Claims**

1. A film comprised of multilayered material (1) intended, after being cut into parts (2), for wrapping units (3) of products for consumption, typically confectioneries, comprising successively from outside to inside :

   a) a first multilayered assembly (4) comprised of an outer layer (40) of a material whose external surface is printed with a repeated design (41), each of said parts being printed with said design;
   b) a second multilayered assembly (5) comprised of a so-called "central" graphism (50) created by any printing means, in register relative to the repeated design (41) and coated on the inside with an adhesive layer(51).
   c) a third multilayered assembly (6) comprising an inside layer (60) of a material coated exteriorly with a so-called first delaminating layer (61) in contact with said adhesive layer (51) chosen such that the end-consumer of said products can manually separate, by initial delamination, said third assembly (6) from the rest of said film comprising said first and second assemblies (4 + 5), and thus clearly exposing said graphism (50) covered by said adhesive layer (51).

2. A film according to Claim 1, wherein said first assembly (4) comprises in addition, on the inner surface of said outer layer (40), a so-called second delaminating layer (42), selected so as to make possible the transferring of said graphism (50) onto a medium by decaling.

3. A film according to Claim 2 wherein said first (61) and second (42) delaminating layers are selected so as to separate, in order, the third assembly (6) from the rest of the film (4 + 5), then the second assembly (5) from the first assembly (4), in order to be able to apply said second assembly on said medium (7).

4. A film according to any one of Claims 2 and 3, wherein said second assembly (5) comprises exteriorly a lacquer layer (52), preferably a nitrocellulose lacquer, in such a fashion that said graphism (50) affixed to said medium (7) by decaling is non-sticking.

5. A film according to any one of Claims 2 to 4, wherein said third assembly (6) comprises, between said inner layer (60) and said first delaminating layer (61), a resin layer (62), preferably a layer of polyolefin, in such fashion as to made the outer surface of said layer (60) smoother and to favor adhesion of said first delaminating layer (61) on the outer surface of said third assembly (6).

6. A film according to any one of Claims 1 to 5, wherein said third assembly (6) is coated on its inner surface with a sealant layer (64), preferably a cold sealant layer.

7. A film according to any one of Claims 1 to 6, wherein said inner layer (60) is printed on its inner face with a so-called "inside" graphism (63), in such fashion as to permit a lottery or a game based on the comparison of said "inside" graphism (63) and said "central" graphism (50) or said repeated design (41).

8. A film according to any one of Claims 1 to 7, wherein said outer layer (40) is a non-transparent layer selected from paper, aluminum foil of of less than 30 μm in thickness, thermoplastic film of less than 50 μm in thickness, whether metallized or not.

9. A film according to any one of Claims 1 to 8, wherein said inner layer (60) is a non-transparent material selected from among: paper, aluminum foil of less than 30 μm in thickness, thermoplastic film material of at least 50 μm in thickness, whether metallized or not.

10. A film according to any one of Claims 1 to 9, wherein said first delaminating layer (61) is comprised of a layer of materials, well-known to have an anti-adhesion function relative to said adhesive layer (51) and applied to said inner layer (6)either directly or by means of an intermediate resin layer (62).

11. A film according to Claim 10, wherein said first delaminating layer (61) is comprised of a layer of silicone.

12. A film according to any one of Claims 1 to 9, wherein said inner layer (60) is treated on its surface in a known manner as such in order to obtain an anti-adhering effect on contact with said second adhesive layer (51).

13. A film according to any one of Claims 2 to 12, wherein said second delaminating layer, utilized to permit said second delaminating, is comprised of any material, coating lacquer, thermoplastic material, selected as to present a delamination force with respect to said central graphism (50), less than that of said adhesive layer (51) relative to the force of the central graphism (50).

14. A film according to any one of Claims 1 to 13, wherein said adhesive layer (51) is selected from among the so-called "food quality" adhesives, preferably from the aqueous dispersions of polymers.

15. A film according to any one of Claims 1 to 14, wherein said graphism (50, 63), whether inner or central, is comprised of any distinctive visual sign.

16. A process for manufacturing the film according to any one of Claims 1 to 15, wherein:

1) a first subassembly of layers is manufactured starting with a roll of said outer layer (40) :

a) by applying, if necessary, said second delaminating layer (42) onto said outer layer, preferably by extrusion, in order to form the film identified with "40/ (42)";
b) by imprinting, preferably in one pass, the two surfaces of the film formed in a), the outer surface being imprinted with said repeated designs (41), the inner surface with said central graphism (50), each said central graphism (50) facing and in register with each of said repeated designs (41), a layer of lacquer (52) being eventually applied before imprinting of said central graphism in order to form the film identified with "41/ 40/ (42) / (52) / 50".

2) a second subassembly of layers using a roll of said internal layer (60) is manufactured :

a) by applying, if necessary, another layer of resin (62) and, in this instance, preferably by extrusion onto said inner layer (60), to form the film identified with "(62) / 60".
b) by applying, if necessary said first delaminating layer (61) onto the film obtained in a), in the case wherein said inner layer (60) would not already have been on the surface, to obtain an anti-adhering effect in order to obtain the film identified with "61/ (62)/ 60".
c) by applying, if necessary, said sealing layer (64)and, in this case, preferably by extrusion, in order to obtain the film identified by "61/ (62) / 60 / (64)".

3) said first and said second subassembly are formed by lamination using said adhesive layer (51), to obtain the film having the following structure from the inside to the outside "41 / 40 / (42) / (52) / 50 / 51 / 61 / (62) / 60 / (64)", in a large-width roll (7) cut down finally into small-width rolls (8).

**Patentansprüche**

1. Folie (1) aus Mehrschichtwerkstoffen, die nach Zerschneiden in Portionen (2) für die Verpackung einzelner Konsumprodukte (3), typischerweise Süßwaren, bestimmt ist, umfassend nacheinander von außen nach innen:

a) einen ersten Mehrschichtverbund (4) mit einer äußeren Werkstoffschicht (40), deren Außenseite mit einem repetitiven Muster (41) bedruckt ist, wobei jede Portion mit dem Muster bedruckt sein muss,
b) einen zweiten Mehrschichtverbund (5) mit einer sog. "zentralen" grafischen Darstellung (50), die durch eine beliebige Bedruckvorrichtung gebildet wird, in Bezug auf das repetitive Muster (41) markiert und innen mit einer Adhäsivschicht (51) überzogen ist,
c) einen dritten Mehrschichtverbund (6) mit einer inneren Werkstoffschicht (60), die außen mit einer mit der Adhäsivschicht (51) in Kontakt stehenden, sog. ersten Delaminierschicht (61) überzogen ist, welche so gewählt ist, dass der Endverbraucher dieser Produkte durch ein erstes Delaminieren den dritten Schichtverbund (6) vom Rest der Folie, der den ersten und zweiten Schichtverbund (4+5) umfasst, manuell trennen und somit die mit der Adhäsivschicht (51) überzogene grafische Darstellung (50) deutlich zutage bringen kann.

2. Folie nach Anspruch 1, bei der der erste Schichtverbund (4) auf der Innenseite der Außenschicht (40) zusätzlich eine sog. zweite Delaminierschicht (42) aufweist, die so gewählt ist, dass sie die Übertragung der grafischen Darstellung (50) auf einen Träger im Abziehbildverfahren ermöglicht.

3. Folie nach Anspruch 2, bei der die erste (61) und zweite (42) Delaminierschicht so gewählt sind, dass der Reihe nach der erste Schichtverbund (6) vom Rest der Folie (4+5) und anschließend der zweite Schichtverbund (5) vom ersten Schichtverbund (4) getrennt wird, um den zweiten Schichtverbund auf den Träger (7) aufzutragen.

4. Folie nach einem der Ansprüche 2 und 3, bei der der zweite Schichtverbund (5) außen eine Lackschicht (52) aufweist, vorzugsweise einen Nitrozelluloselack, damit die im Abziehbildverfahren auf dem Träger (7) fixierte grafische Darstellung (50) nicht klebrig ist.

5. Folie nach einem der Ansprüche 2 bis 4, bei der der dritte Schichtverbund (6) zwischen der Innenschicht (60) und der ersten Delaminierschicht (61) eine Harzschicht (62) aufweist, vorzugsweise eine Polyolefinschicht, um die Außenfläche der Schicht (60) glatter zu machen und die Haftung der ersten Delaminierschicht (61) auf der Außenseite des dritten Schichtverbunds (6) zu fördern.

6. Folie nach einem der Ansprüche 1 bis 5, bei der der dritte Schichtverbund (6) auf seiner Innenseite mit einer Versiegelungsschicht (64), vorzugsweise einer Kaltversiegelungsschicht, überzogen ist.

7. Folie nach einem der Ansprüche 1 bis 6, bei der die Innenschicht (60) auf ihrer Innenseite mit einer sog. "inneren" grafischen Darstellung (63) bedruckt ist, um eine Lotterie oder ein Spiel zu ermöglichen, das auf dem Vergleich zwischen der "inneren" grafischen Darstellung (63) und der "zentralen" grafischen Darstellung (50) oder dem repetitiven Muster (41) beruht.

8. Folie nach einem der Ansprüche 1 bis 7, bei der die Außenschicht (40) aus einem nicht transparenten Werkstoff besteht, gewählt unter: Papier, Aluminiumfolie von weniger als 30 µm Dicke, Film aus thermoplastischem Material von weniger als 50 µm Dicke, metallisiert oder nicht.

9. Folie nach einem der Ansprüche 1 bis 8, bei der die Innenschicht (60) aus einem nicht transparenten Werkstoff besteht, gewählt unter: Papier, Aluminiumfolie von weniger als 30 µm Dicke, Film aus thermoplastischem Material von weniger als 50 µm Dikke, metallisiert oder nicht.

**10.** Folie nach einem der Ansprüche 1 bis 9, bei der die erste Delaminierschicht (61) aus einer Schicht aus Werkstoffen besteht, welche dafür bekannt sind, dass sie eine antiadhäsive Funktion in Bezug auf die Adhäsivschicht (51) haben, und auf die Innenschicht (60) entweder direkt oder über eine Harzzwischenschicht (62) aufgetragen wird.

**11.** Folie nach Anspruch 10, bei der die erste Delaminierschicht (61) aus einer Silikonschicht besteht.

**12.** Folie nach einem der Ansprüche 1 bis 9, bei der die Innenschicht (60) auf in sich bekannte Weise oberflächenbehandelt wird, um beim Kontakt mit der zweiten Adhäsivschicht (51) eine antiadhäsive Wirkung zu erzielen.

**13.** Folie nach einem der Ansprüche 2 bis 12, bei der die zweite Delaminierschicht, die zum zweiten Delaminieren verwendet wird, aus einem beliebigen Werkstoff, Beschichtungslack, Thermoplast besteht, der so gewählt wird, dass er in Bezug auf die zentrale grafische Darstellung (50) eine Delaminierkraft aufweist, die geringer ist als die der Adhäsivschicht (51) in Bezug auf die gleiche zentrale grafische Darstellung (50).

**14.** Folie nach einem der Ansprüche 1 bis 13, bei der die Adhäsivschicht (51) unter den sog. Nahrungsmittel-Klebern gewählt wird, vorzugsweise unter den wässrigen Polymerdispersionen.

**15.** Folie nach einem der Ansprüche 1 bis 14, bei der die grafische Darstellung (50, 63), sei es die innere oder die zentrale, aus einem beliebigen distinktiven Sichtzeichen besteht.

**16.** Verfahren zur Herstellung der Folie nach einem der Ansprüche 1 bis 15, bei dem:

   1) ein erster Teilverbund aus einer Rolle der Außenschicht (40) hergestellt wird:

      a) indem bei Bedarf die zweite Delaminierschicht (42) vorzugsweise durch Extrusion auf die Außenschicht aufgetragen wird, um den mit "40/(42)" bezeichneten Film zu bilden,
      b) indem die beiden Seiten des in a) gebildeten Films vorzugsweise in einem Arbeitsgang bedruckt werden, wobei die Außenseite mit den repetitiven Mustern (41), die Innenseite mit den zentralen grafischen Darstellungen (50) bedruckt wird, wobei jede zentrale grafische Darstellung (50) in Bezug auf jedes repetitive Muster (41) gegenüberliegend angeordnet und markiert ist, wobei vor dem Aufdrukken der zentralen grafischen Darstellung eventuell eine Lackschicht (52) aufgebracht wird, um den mit "41/40/(42)/(52)/50" bezeichneten Film zu bilden,

2) ein zweiter Teilverbund aus einer Rolle der Innenschicht (60) hergestellt wird:

      a) indem bei Bedarf eine weitere Harzschicht (62), und in diesem Fall vorzugsweise durch Extrusion auf die Innenschicht (60) aufgetragen wird, um den mit "(62)/60" bezeichneten Film zu bilden,
      b) indem bei Bedarf die erste Delaminierschicht (61) auf den in a) gebildeten Film aufgetragen wird, falls die Innenschicht (60) zur Erzielung einer antiadhäsiven Wirkung nicht bereits oberflächenbehandelt ist, um den mit "61/(62)/60" bezeichneten Film herzustellen,
      c) indem bei Bedarf die Versiegelungsschicht (64) aufgetragen wird, und in diesem Fall vorzugsweise durch Extrusion, um den mit "61/(62)/60/(64)" bezeichneten Film herzustellen,

3) der erste und der zweite Teilverbund mit Hilfe der Adhäsivschicht (51) durch Laminieren zusammengefügt werden, um auf einer breiten Rolle (7), die anschließend in schmale Rollen (8) zerteilt wird, den Film mit, von außen nach innen, folgendem Aufbau "41/40/(42)/(52)/50/51/61/(62)/60/(64)" herzustellen.

FIG.1

FIG.2

FIG.3

FIG.4